# EUROPÄISCHE PATENTSCHRIFT

(11) **EP 2 775 165 B1**
(45) Veröffentlichungstag und Bekanntmachung des Hinweises auf die Patenterteilung: **16.05.2018**
(21) Anmeldenummer: 14152062.7
(22) Anmeldetag: 22.01.2014
(51) Int. Cl.: F16F 15/03, F16H 1/28, H02K 7/18, H02K 7/116, B60G 13/14, F16H 1/46

(54) **Elektromechanischer Dämpfer**
Electromechanical damper
Amortisseur électromécanique

(30) Priorität: 08.03.2013 DE 102013004012
(43) Veröffentlichungstag der Anmeldung: 10.09.2014
(73) Patentinhaber: AUDI AG, 85045 Ingolstadt (DE)
(72) Erfinder: Willems, Marco, 85053 Ingolstadt (DE)

(56) Entgegenhaltungen:
- EP-A1- 0 118 012
- EP-A1- 1 935 679
- DE-A1- 2 624 374
- DE-A1- 3 444 420
- DE-A1-102009 048 818
- DE-A1-102010 035 087
- DE-A1-102010 035 088
- DE-A1-102011 006 094
- DE-A1-102011 009 608
- JP-A- 2000 297 850
- US-A- 2 450 290
- US-A1- 2002 140 302

## Beschreibung

Die Erfindung betrifft einen elektromechanischen Dämpfer für ein Kraftfahrzeug zur Dämpfung von sich zwischen zwei Bauteilen ergebenden, mechanischen Schwingungen, durch die Antriebsmomente auf einen elektrischen Generator zur Erzeugung einer Dämpfungskraft übertragbar sind, wobei der Dämpfer ein erstes und ein zweites Getriebe aufweist, die als Planetengetriebe mit Hohlrädern, Plantenrädern und Sonnenrädern ausgeführt sind.

Ein elektromechanischer Dämpfer kann an Stelle eines hydraulischen Dämpfers in einem schwingungsfähigen mechanischen System eines Kraftfahrzeugs eingesetzt werden. Wie der hydraulische Dämpfer entzieht der elektrische Dämpfer dem schwingungsfähigen System Energie. Diese wird jedoch nicht in thermische Energie umgewandelt. Vielmehr wird mit der Schwingungsenergie ein dem elektrischen Dämpfer zugeordneter Generator angetrieben, der die Schwingungsenergie in elektrische Energie umwandelt, die in das Bordnetz des Kraftfahrzeuges gespeist werden kann.

Aus der DE 101 15 858 A1 ist ein elektromechanischer Dämpfer für ein Kraftfahrzeug bekannt, der zum Dämpfen mechanischer Schwingungen verwendet wird, die sich zwischen zwei Bauteilen ergeben. Die mechanischen Schwingungen werden in Antriebsmomente umgewandelt, mit denen ein elektrischer Generator zur Erzeugung einer Induktionsspannung antreibbar ist.

Bei dem aus der DE 101 15 858 A1 bekannten elektromechanischen Dämpfer ist der Wirkungsgrad aufgrund oftmals kleiner bzw. langwelliger Fahrzeuganregung gering. Zudem ist die sich einstellende Drehbewegung des im Generator laufenden Rotors im normalen Fahrbetrieb gering. Aufgrund dieser normalerweise geringen Rotor-Drehbewegung werden jedoch Kraftspitzen, die in speziellen Fahrsituationen auftreten können, wegen der geringen Homogenität des Magnetfeldes im Generator stark wahrgenommen. Zudem ist die Dämpfung hochfrequenter Schwingungsanteile in den mechanischen Schwingungen für den elektromechanischen Dämpfer problematisch, und zwar im Hinblick auf die thermische Belastung des Dämpfers.

DE 10 2010 035 087 A1 beschreibt einen elektromechanischen Rotationsdämpfer mit einem Planetengetriebe. Dabei ist der Generator Ober ein Planetengetriebe mit einem Anlenkhebel verbunden. Dieser Anlenkhebel ist wiederum mit der Achse des Fahrzeugs verbunden. Durch das Spiel im Planentengetriebe geschieht der Dämpfkraftaufbau beim Wechsel von Ein- in Ausfedern des Dämpfers erst nach einer Totzeit bis das Spiel überwunden ist und das Getriebe in die andere Drehrichtung antreibt.

EP 0 118 012 A1 offenbart eine Vorrichtung zur Erzeugung von Schwenkbewegungen, insbesondere für die Arme von Industrierobotern, für Fertigungseinrichtungen o. dgl., mit einer ersten Gelenkhälfte und einer zweiten Gelenkhälfte, die um eine Schwenkachse schwenkbeweglich verbunden sind, mit mindestens einem Motor hoher Energiedichte, der mit seinem Rotor und seinem Stator in einer Ausnehmung innerhalb einer der beiden Gelenkhälften aufgenommen ist, wobei der eine Motorteil, z.B. der Stator fest mit der einen Gelenkhälfte verbunden ist, während der andere Motorteil, z.B. der Rotor, in Bezug auf die den Motor aufnehmende eine Gelenkhälfte drehbar ist, und mit einer drehmomenterhöhenden Untersetzungsgetriebevorrichtung, deren Eingang vom umlaufenden Mötorteil, z.B. dem Rotor angetrieben ist und deren Ausgang fest mit der anderen Gelenkhälfte verbunden ist. Der Motor weist auf beiden Axialseiten je eine Untersetzungsgetriebevorrichtung gleicher Art auf, die beide symmetrisch und koaxial zum Motor angeordnet sind. Jede Untersetzungsgetriebevorrichtung ist als Umlaufgetriebe ausgebildet. Mindestens eines der beiden Umlaufgetriebe weist zumindest ein miteinander in Zahneingriff stehendes Zahnradpaar mit einer Schrägverzahnung auf. Die Aufgabe der Erfindung besteht darin, einen elektromechanischen Dämpfer für ein Fahrzeug bereitzustellen, bei dem eine möglichst Spielfreie Kraftübertragung zwischen den Bauteilen der Planetengetriebe bei bauraumreduzierter Gestaltung des Dämpfers erreicht wird.

Dazu ist der erfindungemäße Dämpfer dadurch gekennzeichnet, dass das Statorgehäuse als ein Getriebeelement in dem ersten Getriebe und in dem zweiten Getriebe integriert ist, dass der Rotor des Generators an beiden Stirnseiten mit dem Sonnenrad des jeweiligen Planentengetriebes verbunden ist, dass die Hohlräder, die Plantenräder und die Sonnenräder in den beiden Getrieben jeweils mit schräg zur Achsrichtung ausgerichteten Schrägverzahnungen versehen sind, und dass die Schrägverzahnung an den beiden Sonnenrädern entgegengesetzt gerichtet ist, und dass das radial äußere Hohlrad des Planetengetriebes des ersten Getriebes und das Statorgehäuse eine einstückige Baueinheit bilden, und dass die Hohlräder die Eingangselemente der beiden Planentengetriebe sind, über die Antriebsmomente in die Getriebe einzuleiten sind.

Vor dem Hintergrund bauraumreduzierte Gestaltung ist es vorteilhaft, wenn der Stator des Generators zusammen mit dem radial äußeren Hohlrädern der beiden Planetengetriebe eine einstückige Baueinheit bildet, wobei die Hohlräder als Eingangselemente der Getriebe wirken.

Eine Schrägverzahnung bietet kontinuierlichen Kontakt zwischen den Zahnflanken und hat weniger Spiel als ein gerade verzahntes Getriebe. Zudem ist das akustische Verhalten des schräg verzahnten Getriebes besser. Durch die entgegen gesetzte Schrägverzahnung werden die axialen Kräfte aufgrund der Schrägverzahnung kompensiert und keine zusätzlichen Lagerlasten generiert. Die Schrägverzahnung ist an den beiden Sonnenrädern entgegen gerichtet, so dass die Axialkraft aufgrund der Schrägverzahnung aufgehoben wird.

Für eine weitere Bauraumreduzierung ist es von Vorteil, wenn das Statorgehäuse zugleich als ein Getriebeelement in dem ersten Getriebe und in dem zweiten Getriebe integriert ist. Durch eine solche Konfiguration ergibt sich eine sehr klein bauende Einheit. Die Drehbewegung des Stators wird über die Getriebe zum Rotor des Generators übertragen.

Eine vorteilhafte Ausgestaltung des erfindungsgemäßen Dämpfers ist dadurch gekennzeichnet, dass die Schrägverzahnungen unter einem Winkel von 45 ° gegenüber der Achsrichtung der Zahnräder der Getriebe orientiert sind. Dadurch ergibt sich eine vorteilafter Wirkungsgrad bei der Aufhebung der Axialkraft aufgrund der Schrägverzahnung.

Eine weitere vorteilhafte Ausgestaltung des erfindungsgemäßen Dämpfers ist dadurch gekennzeichnet, dass die Getriebe beidseitig von dem Generator angeordnet sind. Wenn der Rotor des Generators an beiden Stirnseiten mit dem Sonnenrad eines schräg verzahnten Planentengetriebes verbunden wird, erfolgt die Einleitung der Kräfte in den Generator in vorteilhafter Weise symmetrisch oder gleichmäßig verteilt.

Eine weitere vorteilhafte Ausgestaltung des erfindungsgemäßen Dämpfers ist dadurch gekennzeichnet, dass das Statorgehäuse zum Einleiten der Schwingungen in den Dämpfer mit einem ersten Bauteil drehfest verbunden ist, wobei vorzugsweise die Planetenradträger der Planetengetriebe drehfest am zweiten Bauteil verbunden ist. So werden die Kräfte ungedämpft in den Dämpfer eingeleitet und es geht damit nur ein Minimum an Energie "verloren".

Eine weitere vorteilhafte Ausgestaltung des erfindungsgemäßen Dämpfers ist dadurch gekennzeichnet, dass die Planetenträger der Planetengetriebe drehfest über ein Verbindungselement zwischen den jeweiligen Planetenträgern mit dem Fahrzeugaufbau verbunden sind Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In den Zeichnungen bedeutet:
- Fig. 1: eine schematische Darstellung einer Radaufhängung eines Fahrzeugrades; und
- Fig. 2: in eine schematische Schnittdarstellung durch den am Fahrzeugaufbau befestigten elektromechanischen Dämpfer.

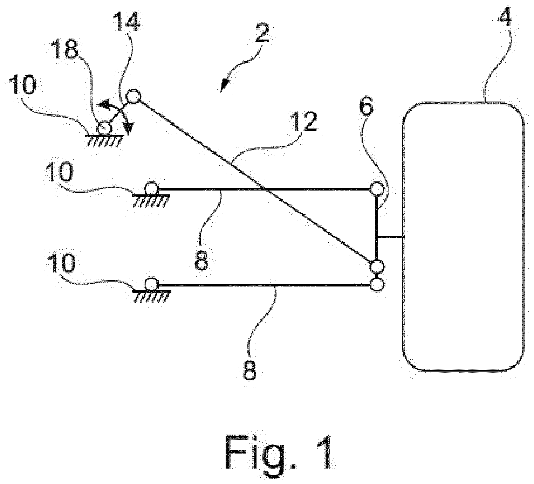

In Fig. 1 ist die Radaufhängung 2 eines Fahrzeugrades 4 eines Kraftfahrzeuges gezeigt. Das Fahrzeugrad 4 ist an einem Radträger 6 drehbar gelagert. Der Radträger 6 ist über Querlenker 8 an einem Fahrzeugaufbau 10 angelenkt. Zusätzlich wirkt ein Schräglenker 12 auf den Radträger 6. Der Schräglenker 12 ist über ein Kopplungsglied 14 und einen Dämpfer 18 mit dem Fahrzeugaufbau 10 verbunden.

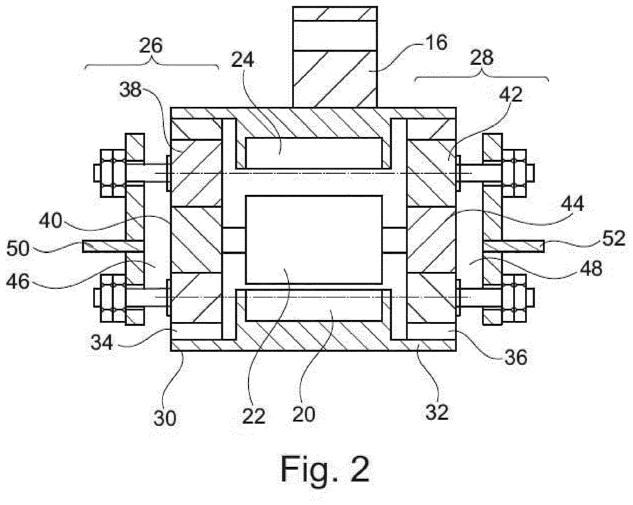

In Fig. 2 ist ein Anlenkglied 16 gezeigt, das an dem Kopplungsglied 14 befestigen und in dem Dämpfer drehbar gelagert ist.

Der elektromechanische Dämpfer 18 weist gemäß Fig. 2 ein radial äußeres Statorgehäuse 20 sowie einen damit zusammenwirkenden Rotor 22 auf. Das Statorgehäuse 20 trägt an seiner Innenseite eine Statorwicklung 24, die mit einer nicht dargestellten Elektromagneten in dem Rotor 22 zusammenwirkt.

Wie in Fig. 2 gezeigt ist, ist das Statorgehäuse 20 über zwei Getriebe 26 und 28 antriebsmäßig mit dem Rotor 22 in Verbindung. Hierzu ist das Statorgehäuse 20 gemäß Fig. 2 beidseitig durch ein Hohlrad 30 beziehungsweise 32 verlängert. Die im Vergleich zur Statorwicklung 24 im Durchmesser größeren Hohlräder 30, 32 schließen in Axialrichtung an dem Statorgehäuse 20 an und bilden Momenten-Eingangselemente der als Planetengetriebe gestalteten Getriebe 26, 28.

In dem als Planetengetriebe ausgeführten Getriebe 26 kämmt das Hohlrad 30 mit seiner Innenverzahnung 34 mit Planetenrädern, von denen nur das Planetenrad 38 gezeigt ist. Die Planetenräder sind wiederum in Zahneingriff mit einem Sonnenrad 40, das koaxial zur Drehachse des Rotors 22 mit diesem verbunden ist.

Die Planetenräder des ersten Getriebes 26 sind gemäß Fig. 2 an einem Planetenradträger 46 drehbar gelagert. Der Planetenradträger 46 ist wiederum drehfest mit einem feststehenden Bügel(nicht gezeigt) verbunden, der an dem Fahrzeugaufbau 10 montiert ist.

Das Sonnenrad 40 des ersten Getriebes 28 wird drehfest von einer Welle getragen, auf deren, in Fig. 2 rechten Stirnseite ein Sonnenrad 44 des zweiten Getriebes 28 angeformt ist. Das zweite Getriebe 28 ist, wie auch das erste Getriebe 30, als Planetengetriebe ausgeführt, wobei Planetenräder, von denen nur das Planetenrad 42 gezeigt ist, radial außen mit einer Innenverzahnung 36 des fest am Fahrzeugaufbau 10 montierten Hohlrades 32 des Statorgehäuses 20 kämmen.

Ein mit den Planetenrädern verbundener Steg 52 des zweiten Getriebes 28 bildet zusammen mit dem Steg 50 des ersten Getriebes 26 das Momenten-Ausgangselement des Dämpfers18.

Das Anlenkglied 16 ist so mit dem Statorgehäuse 20 des Generators verbunden. Das Statorgehäuse 20 ist wiederum an den beiden Stirnseiten mit einem Hohlrad 30 beziehungsweise einem Hohlrad 32 einstückig ausgebildet. Über die Hohlräder 30, 32 werden die Planetenräder 38, 42 angetrieben. Über die Planetenräder 38, 42 werden die beiden Sonnenräder 40, 44 am Rotor 22 angetrieben.

Die Hohlräder 30, 32, die Planetenräder 38, 42 und die Sonnenräder 40, 44 in den beiden Getrieben 26, 28 sind jeweils mit schräg zur Achsrichtung ausgerichteten Verzahnungen versehen, wobei die Schrägverzahnung an den beiden Sonnenrädern 40, 44 entgegengesetzt gerichtet ist.

Während des Fahrbetriebs wird das Anlenkglied 16 mit betriebsbedingten, mechanischen Schwingungen beaufschlagt, die in Drehschwingungen des Anlenkglieds 16 mit Bezug auf die Schwenkachse resultieren. Durch diese Drehschwingungen wird der Stator mit Antriebsmomenten angetrieben. Diese Antriebsmomente werden über die Hohlräder 30, 32 in die Getriebe 26, 28 eingeleitet. Die Übersetzungsverhältnisse des ersten Getriebes 26 und des zweiten Getriebes 28 ist dabei so bemessen, dass sich auch bei kleinen bzw. langwelligen mechanischen Schwingungen eine, für eine effektive Spannungsinduktion geeignete Rotordrehzahl ergibt.

### Bezugszeichenliste

- 2: Radaufhängung
- 4: Fahrzeugrad
- 6: Radträger
- 8: Querlenker
- 10: Fahrzeugaufbau
- 12: Schräglenker
- 14: Kopplungsglied
- 16: Anlenkglied
- 18: Dämpfer
- 20: Statorgehäuse
- 22: Rotor
- 24: Statorwicklung
- 26: erstes Getriebe
- 28: zweites Getriebe
- 30: Hohlrad erstes Getriebe
- 32: Hohlrad zweites Getriebe
- 34: Innenverzahnung Hohlrad 32
- 36: Innenverzahnung Hohlrad 34
- 38: Planetenrad erstes Getriebe
- 40: Sonnenrad erstes Getriebe
- 42: Planetenrad zweites Getriebe
- 44: Sonnenrad zweites Getriebe
- 46: Planetenradträger erstes Getriebe
- 48: Planetenradträger zweites Getriebe
- 50: Steg erstes Getriebe
- 52: Steg zweites Getriebe

## Patentansprüche

1. Elektromechanischer Dämpfer für ein Fahrzeug zur Dämpfung von sich zwischen zwei Bauteilen ergebenden, mechanischen Schwingungen, durch die Antriebsmomente auf einen elektrischen Generator zur Erzeugung einer Dämpfungskraft übertragbar sind, wobei der Dämpfer (18) ein erstes und ein zweites Getriebe (26, 28) aufweist, die als Planetengetriebe mit Hohlrädern, Planetenrädern und Sonnenrädern ausgeführt sind,
**dadurch gekennzeichnet, dass**
das Statorgehäuse (20) als ein Getriebeelement in dem ersten Getriebe (26) und in dem zweiten Getriebe (28) integriert ist, dass
der Rotor (22)des Generators an beiden Stirnseiten mit dem Sonnenrad (40 bzw. 44) des jeweiligen Planetengetriebes verbunden ist, dass
die Hohlräder (30, 32), die Planetenräder (38, 42) und die Sonnenräder (40, 44) in den beiden Getrieben (26, 28) jeweils mit schräg zur Achsrichtung ausgerichteten Schrägverzahnungen versehen sind, und dass die Schrägverzahnung an den beiden Sonnenrädern (40, 44) entgegengesetzt gerichtet ist, und dass
das radial äußere Hohlrad (30) des ersten Getriebes (26), das radial äußere Hohlrad (32) des zweiten Getriebes (28) und das Statorgehäuse (20) eine einstückige Baueinheit bilden, und dass die Hohlräder (30, 32) die Eingangselemente der beiden Planentengetriebe sind, über die Antriebsmomente in die Getriebe (26, 28) einzuleiten sind.

2. Elektromechanischer Dämpfer nach Anspruch 1, **dadurch gekennzeichnet, dass** die Schrägverzahnungen unter einem Winkel von 45 ° gegenüber der Achsrichtung der Zahnräder der Getriebe (26, 28) orientiert sind.

3. Elektromechanischer Dämpfer nach Anspruch 1 oder 2,
**dadurch gekennzeichnet, dass** die Getriebe (26, 28) beidseitig von dem Generator angeordnet sind.

4. Elektromechanischer Dämpfer nach einem der Ansprüche 1 bis 3, **dadurch gekennzeichnet, dass** das Statorgehäuse (20) zum Einleiten der Schwingungen in den Dämpfer (18) mit dem Kopplungsglied (14) drehfest verbunden ist.

5. Elektromechanischer Dämpfer nach einem der Ansprüche 1 bis 4, **dadurch gekennzeichnet, dass** die Planetenträger der Planetengetriebe drehfest über ein Verbindungselement zwischen den jeweiligen Planetenträgern mit dem Fahrzeugaufbau (10) verbunden sind

## Claims

1. Electromechanical damper for a vehicle for damping mechanical oscillations arising between two components by which drive torques are transmittable to an electric generator for generating a damping force, wherein the damper (18) comprises a first and a second gearbox (26, 28) constructed in the form of a planetary gear train having ring gears, planet wheels and sun wheels, **characterised in that** the stator housing (20) is integrated in the first gearbox (26) and in the second gearbox (28) as a gear element, that the rotor (22) of the generator is connected at both end faces to the sun wheel (40 or 44) of the respective planetary gear train, that the ring gears (30, 32), the planet wheels (38, 42) and the sun wheels (40, 44) in the two gearboxes (26, 28) are each provided with helical teeth oriented obliquely to the axial direction, and that the helical teeth of the two sun wheels (40, 44) are directed in opposition to one another, and that the radially outer ring gear (30) of the first gearbox (26), the radially outer ring gear (32) of the second gearbox (28) and the stator housing (20) form a single-piece structure, and that the ring gears (30, 32) are the input elements of the two planetary gear trains by which drive torques can be introduced into the gearboxes (26, 28).

2. Electromechanical damper according to claim 1, **characterised in that** the helical teeth are oriented at an angle of 45° in relation to the axial direction of the gear wheels of the gearboxes (26, 28).

3. Electromechanical damper according to claim 1 or 2, **characterised in that** the gearboxes (26, 28) are arranged on both sides of the generator.

4. Electromechanical damper according to any of claims 1 to 3, **characterised in that** the stator housing (20) is non-rotatably connected to the coupler (14) for introducing oscillations into the damper (18).

5. Electromechanical damper according to any of claims 1 to 4, **characterised in that** the planet carriers of the planetary gear trains are non-rotatably connected to the vehicle body (10) via a connection element placed between the respective planet carriers.

## Revendications

1. Amortisseur électromécanique pour un véhicule pour l'amortissement de vibrations mécaniques formées entre deux composants, par lesquelles des couples d'entraînement peuvent être transmis à un générateur électrique pour la génération d'une force d'amortissement, dans lequel l'amortisseur (18) présente un premier et un deuxième engrenage (26, 28), qui sont réalisés en tant qu'engrenage planétaire avec des roues creuses, des roues planétaires et des roues solaires,
**caractérisé en ce que**
le boîtier de stator (20) est intégré en tant qu'élément d'engrenage dans le premier engrenage (26) et dans le deuxième engrenage (28), que
le rotor (22) du générateur est relié aux deux côtés frontaux à la roue solaire (40 ou 44) de l'engrenage planétaire respectif, que
les roues creuses (30, 32), les roues planétaires (38, 42) et les roues solaires (40, 44) dans les deux engrenages (26, 28) sont dotées respectivement de dentures hélicoïdales dirigées en biais par rapport à la direction de l'axe, et que
la denture hélicoïdale au niveau des deux roues solaires (40, 44) est dirigée dans un sens opposé, et que
la roue creuse radialement extérieure (30) du premier engrenage (26), la roue creuse radialement extérieure (32) du deuxième engrenage (28) et le boîtier de stator (20) forment une unité de construction d'un seul tenant, et que les roues creuses (30, 32) sont les éléments d'entrée des deux engrenages planétaires, par le biais desquels des couples d'entraînement doivent être introduits dans les engrenages (26, 28).

2. Amortisseur électromécanique selon la revendication 1, **caractérisé en ce que** les dentures hélicoïdales sont orientées en formant un angle de 45° par rapport à la direction de l'axe des roues dentées des engrenages (26, 28).

3. Amortisseur électromécanique selon la revendication 1 ou 2,
**caractérisé en ce que** les engrenages (26, 28) sont agencés des deux côtés du générateur.

4. Amortisseur électromécanique selon l'une quelconque des revendications 1 à 3,
**caractérisé en ce que** le boîtier de stator (20) est relié solidaire en rotation à l'organe de couplage (14) pour l'introduction des vibrations dans l'amortisseur (18).

5. Amortisseur électromécanique selon l'une quelconque des revendications 1 à 4,
**caractérisé en ce que** les porte-satellites des engrenages planétaires sont reliés solidaires en rotation à la carrosserie de véhicule (10) par le biais d'un élément de liaison entre les porte-satellites respectifs.
